# EUROPEAN PATENT APPLICATION

(11) **EP 2 634 011 A1**
(43) Date of publication of application: **04.09.2013**
(21) Application number: 13156555.8
(22) Date of filing: 25.02.2013
(51) Int. Cl.: B60B 27/00, F16D 1/076

(54) **Spline forming method for hub unit, hub unit, spline forming method for joint, and joint**

(30) Priority: 02.03.2012 JP 2012046437
(71) Applicant: JTEKT CORPORATION, Osaka-shi Osaka 542-8502 (JP)
(72) Inventor: Harada, Katsuyuki, Osaka-shi, Osaka 542-8502 (JP); Anno, Hiroshi, Osaka-shi, Osaka 542-8502 (JP)
(74) Representative: Winter, Brandl, Fürniss, Hübner, Röss, Kaiser, Polte - Partnerschaft

(57) **Abstract**

Splines, which are to be meshed with a joint that transmits torque to a rotary ring of a hub unit, are formed in a side face of the rotary ring, the side face being on one side of the rotary ring in the axial direction. Spline grooves are formed in the side face by subjecting the side face to broaching.

## Description

### BACKGROUND OF THE INVENTION

### 1. Field of the Invention

The invention relates to a hub unit, a spline forming method of forming splines in a portion of the hub unit, a j oint that transmits rotary torque to the hub unit, and a spline forming method of forming splines in a portion of the joint.

### 2. Description of Related Art

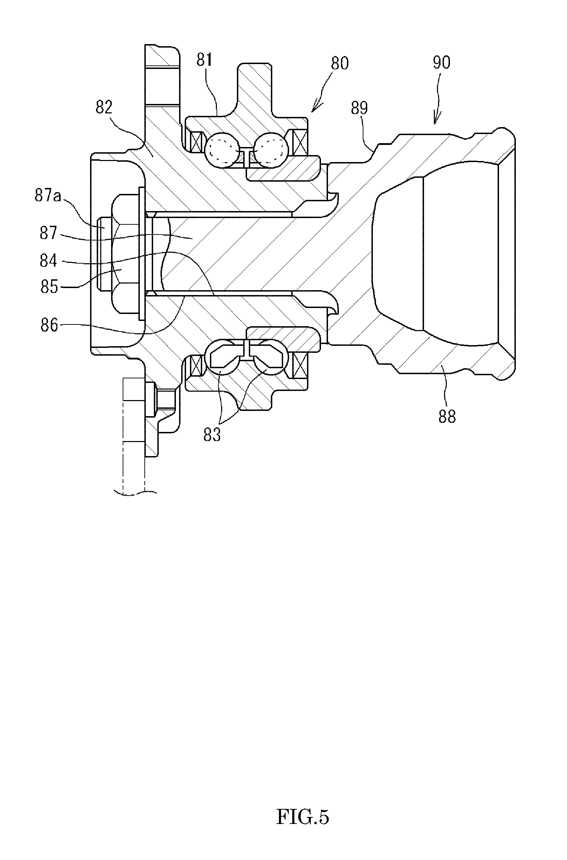

In order to support a wheel such that the wheel is rotatable with respect to a suspension provided on a body of a vehicle, for example, a wheel support device shown in FIG. 5 is used. The wheel support device includes a hub unit 80 and a joint 90 that transmits torque to the hub unit 80.

The hub unit 80 includes a fixed ring 81, a rotary ring 82 and rolling elements 83 that are provided between the fixed ring 81 and the rotary ring 82. The fixed ring 81 is fixed to the suspension. The wheel is connected to the rotary ring 82. The rolling elements 83 are arranged between the fixed ring 81 and the rotary ring 82. Internal splines 84 are formed in the inner periphery of the rotary ring 82 of the hub unit 80. The joint 90 has an outer ring 89. The outer ring 89 has a tubular body portion 88 and a shaft portion 87. The shaft portion 87 extends from the body portion 88 in the axial direction. External splines 86 that mesh with the internal splines 84 are formed on the outer periphery of the shaft portion 87 so that torque transmission between the hub unit 80 and the joint 90 is allowed.

When the configuration shown in FIG. 5 is employed, many processes are required to assemble the hub unit 80 and the joint 90 together. That is, the following processes are required. First, an alignment for positioning the hub unit 80 and the outer ring 89 of the joint 90 such that the hub unit 80 and the outer ring 89 extend along the same straight line is performed (first process). The shaft portion 87 of the joint 90 is press-fitted (temporarily press-fitted) into the rotary ring 82, and the distal end of the shaft portion 87 is protruded from an axial end face (left end face in FIG. 5) of the rotary ring 82 (second process). A temporary nut (not shown) is screwed to a threaded portion 87a formed at the distal end of the shaft portion 87 (third process). By screwing the temporary nut to the threaded portion 87a, the shaft portion 87 is press-fitted (fully press-fitted) into the rotary ring 82 until no gap remains between the rotary ring 82 of the hub unit 80 and the outer ring 89 of the joint 90 (fourth process). The temporary nut is removed from the shaft portion 87 (fifth process). A nut 85 is fastened to the threaded portion 87a of the shaft portion 87 (sixth process). The nut 85 is fixed to the axial end face of the rotary ring 82 by crimping, or the like, to prevent loosening of the nut 85 (seventh process). As shown in FIG. 5, the shaft portion 87 is press-fitted into the rotary ring 82 so that the external splines 86 that extend in the axial direction mesh with the internal splines 84 that extend in the axial direction. Therefore, particularly strict dimensional control is required to form the splines 86, 84. As a result, many man-hours are required also in the process of forming the splines.

Therefore, in order to make it easier to assemble a hub unit and a joint together, for example, a wheel support device (wheel bearing device) described in Japanese Patent Application Publication No. 2008-284920 (JP 2008-284920 A) is used. In the wheel support device, first splines are formed in an annular side face of a rotary ring of the hub unit, the annular side face being on one side of the rotary ring in the axial direction, and second splines that mesh with the first splines are formed in an annular side face of an outer ring of the joint, the annular side face being on the other side of the outer ring in the axial direction. The first splines have a plurality of spline grooves that radiate from the center side of the annular side face of the rotary ring. The second splines have a plurality of spline grooves that radiate from the center side of the annular side face of the outer ring.

In the case of the wheel support device described in JP 2008-284920 A, the hub unit and the joint are assembled together in the following manner. First, the hub unit and the outer ring of the joint are arranged so as to face each other in the axial direction. Then, the first splines of the hub unit and the second splines of the joint are meshed with each other. After that, the hub unit and the outer ring of the joint are fastened together with a bolt.

In the case of the wheel support device described in JP 2008-284920 A, it is easy to assemble the hub unit and the joint together. The first splines of the hub unit and the second splines of the joint may be formed by, for example, machining through form rolling. However, the first splines and the second splines are formed independently from each other by machining. Therefore, a backlash in the circumferential direction and a misalignment in the axial direction are likely to occur between the first splines and the second splines that are to be meshed with each other due to, for example, a manufacturing error. If there is such a backlash, or the like, abnormal noise may be generated during transmission of torque or the performance of transmission of torque may decrease. Therefore, the splines that are formed in the hub unit need to have high accuracy. In addition, the splines that are formed in the side face of the joint and that are in mesh with the rotary ring of the hub unit also need to have high accuracy.

### SUMMARY OF THE INVENTION

It is an object of the invention to provide a spline forming method for a hub unit and a spline forming method for a joint, which make it possible to form splines with high accuracy more easily than in related art, and the hub unit and the joint in which splines with high accuracy are formed.

An aspect of the invention relates to a spline forming method for a hub unit that includes: a fixed ring that is fixed to a vehicle body-side member; a rotary ring to which a wheel is fitted; and rolling elements that are arranged between the fixed ring and the rotary ring. The spline forming method is a method for forming splines, which are to be meshed with a joint that transmits torque to the rotary ring, in a side face of the rotary ring of the hub unit, the side face being on one side of the rotary ring in an axial direction. According to the method, spline grooves are formed in the side face by subjecting the side face to broaching.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 a longitudinal sectional view that shows a wheel support device according to an embodiment of the invention;
FIG. 2 is a perspective view of a side face of a rotary ring of a hub unit, the side face being on one side of the rotary ring in the axial direction;
FIG. 3 is a sectional view taken along the line X-X in FIG. 2;
FIG. 4 is a perspective view of a side face of an outer ring of a joint, the side face being on the other side of the outer ring in the axial direction; and
FIG. 5 is a sectional view that shows an example of a hub unit and an outer ring of a joint according to related art.

### DETAILED DESCRIPTION OF EMBODIMENTS

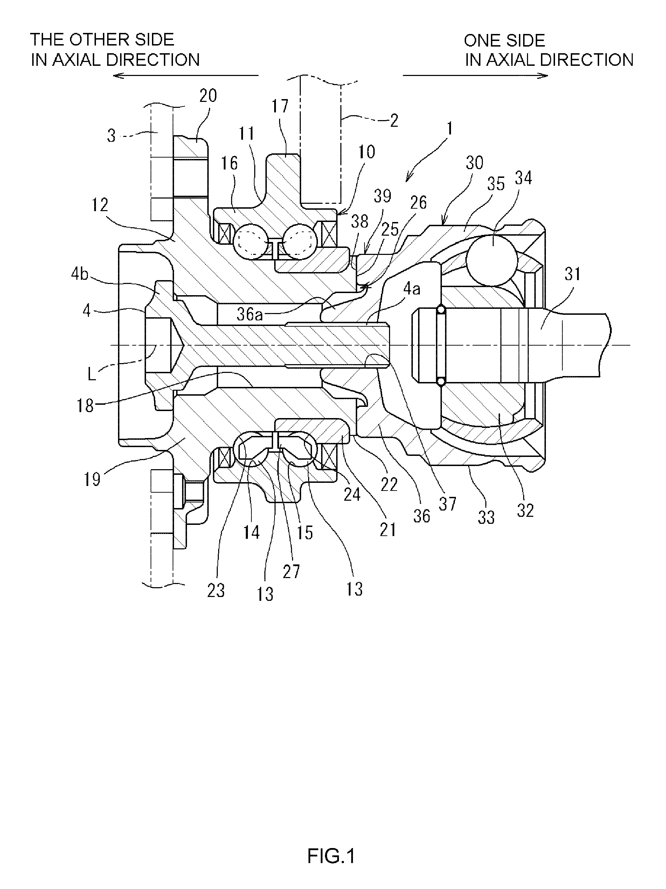

An embodiment of the invention will be described with reference to the accompanying drawings. FIG. 1 is a longitudinal sectional view that shows a wheel support device 1 that includes a hub unit 10 and a joint 30 according to one embodiment of the invention. The hub unit 10 is fitted to a suspension 2 provided on a body of a vehicle, and is used to support a wheel 3 such that the wheel 3 is rotatable with respect to the suspension 2. The joint 30 is coupled to the hub unit 10, and is used to transmit rotary torque to a rotary ring 12 of the hub unit 10. The hub unit 10 and the joint 30 are fixedly coupled to each other with a bolt 4 that serves as a coupling member.

The lateral direction of the vehicle coincides with the axial direction of the wheel support device 1, and the hub unit 10 and the joint 30 are provided side by side in the lateral direction of the vehicle. The hub unit 10 is provided outward of the joint 30 in the lateral direction, and the joint 30 is provided inward of the hub unit 10 in the lateral direction. In FIG. 1, the right side is one side in the axial direction (inner side in the lateral direction of the vehicle), and the left side is the other side in the axial direction (outer side in the lateral direction of the vehicle).

The hub unit 10 includes a fixed ring 11, the rotary ring 12, and balls (rolling elements) 13. The fixed ring 11 is fixed to the suspension 2 with bolts (not shown). The wheel 3 is fitted to the rotary ring 12. The balls 13 are provided between the fixed ring 11 and the rotary ring 12. The fixed ring 11 is arranged radially outward of the rotary ring 12, and a center line L of the rotary ring 12 coincides with the center line of the fixed ring 11.

The fixed ring 11 has a tubular body portion 16 and a flange portion 17. Raceway surfaces 14, 15 are formed on the inner periphery of the body portion 16. The flange portion 17 extends radially outward from the body portion 16. The flange portion 17 is fixed to the suspension 2. Thus, the hub unit 10 is fixed to a vehicle body-side member.

The rotary ring 12 has a hollow shaft portion 19, a flange portion 20, and an annular inner ring member 21. A through-hole 18 is formed at the center of the shaft portion 19. The flange portion 20 extends radially outward from a portion of the shaft portion 19, the portion being on the other side of the shaft portion 19 in the axial direction. The inner ring member 21 is fitted onto a portion of the shaft portion 19, the portion being on one side of the shaft portion 19. The through-hole 18 is formed so as to linearly extend along the center line L of the rotary ring 12. The inner ring member 21 is fixed to the shaft portion 19 by being clinched by a large-diameter portion 22. The large-diameter portion 22 is formed by plastically deforming an end portion of the shaft portion 19 radially outward, the end portion being on the one side of the shaft portion 19 in the axial direction. Raceway surfaces 23, 24 are formed on the outer periphery of the shaft portion 19 and the outer periphery of the inner ring member 21, respectively. First splines (spline teeth) 26 are formed in a side face 25 of the large-diameter portion 22, the side face 25 being on one side (right side in FIG. 1) of the large-diameter portion 22 in the axial direction.

The balls 13 are arranged in the circumferential direction, and are arranged in two rows. The balls 13 arranged in one of the rows roll on the raceway surfaces 14, 23, and the balls 13 arranged in the other row roll on the raceway surfaces 15, 24. The balls 13 in each row are retained at equal intervals in the circumferential direction by a cage 27. The balls 13, the fixed ring 11 and the rotary ring 12 constitute a double-row angular contact ball bearing.

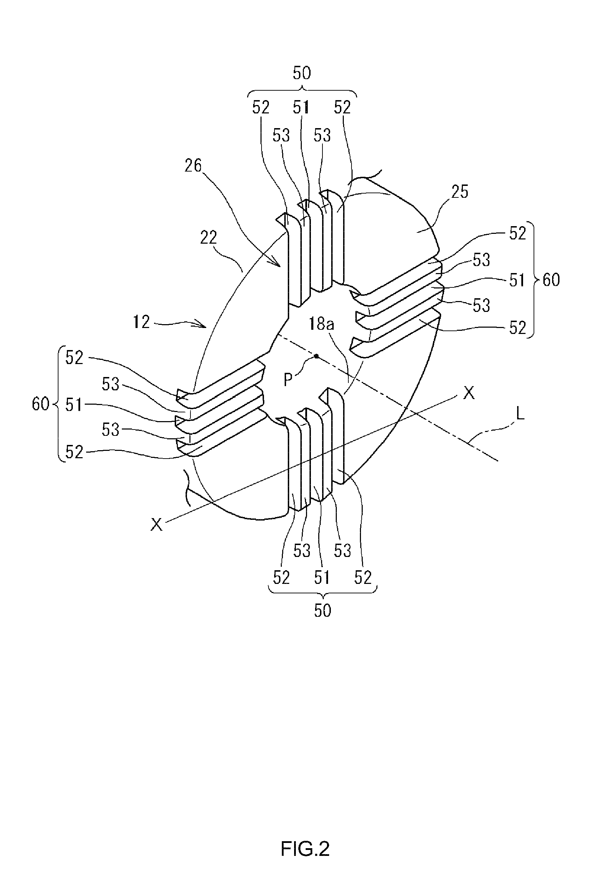

FIG. 2 is a perspective view of the side face 25 of the rotary ring 12 (large-diameter portion 22) of the hub unit 10. The side face 25 faces one side in the axial direction (faces inward in the lateral direction of the vehicle), and is formed of an annular face that has an opening 18a of the through-hole 18 (see FIG. 1) at its center. The first splines 26 are formed in the side face 25. The side face 25 is a face that is perpendicular to the center line L of the rotary ring 12.

The first splines 26 include a plurality of (four in the present embodiment) spline groove groups 50, 60, 50, 60. The spline groove groups 50, 60, 50, 60 are arranged at predetermined intervals around the opening 18a of the through-hole 18. In the present embodiment, the four spline groove groups 50, 60, 50, 60 are arranged at equal intervals of 90 degrees about an intersection P of the center line L of the rotary ring 12 with the side face 25. That is, a pair of spline groove groups 50, 50 is formed in the side face 25 so as to be point-symmetric at intervals of 180 degrees about the intersection P. As the other pair of spline groove groups, a pair of spline groove groups 60, 60 is formed in the side face 25 so as to be point-symmetric at intervals of 180 degrees about the same point (intersection P). The spline groove groups 50, 60, 50, 60 have the same configuration.

Each of the spline groove groups 50, 60 has a plurality of spline grooves that are parallel to each other. That is, each of the spline groove groups 50, 60 includes a middle spline groove 51 and other spline grooves 52. The spline groove 51 extends linearly in the radial direction (in one direction). The other spline grooves 52 are parallel to the spline groove 51 and extend linearly. The spline grooves 52 are formed on respective sides of the middle spline groove 51 (respective sides of the middle spline groove 51 in the rotation direction of the rotary ring 12). Each of the spline groove groups 50, 60 according to the present embodiment has the three spline grooves 51, 52, 52. The number of the spline grooves may be changed on the basis of the magnitude of transmission torque.

Each of the spline grooves 51, 52, 52 is formed in the side face 25 by subjecting the side face 25 to broaching. A side face (25) that has not been subjected to broaching is a flat surface. Grooves are formed in the flat surface by performing machining with the use of a broaching tool (not shown) that is a long cutting tool, and the grooves are used as the spline grooves 51, 52, 52. Because the broaching tool is driven linearly in its longitudinal direction, the spline grooves 51, 52, 52 formed in the side face 25 also have a linear shape. In addition, the finished sectional shape of each of the spline grooves 51, 52, 52 has substantially the same as the sectional shape of the broaching tool used in machining. That is, the sectional shape of a tooth of the broaching tool is transferred to the side face 25 of the rotary ring 12. The broaching tool is a cutting tool that is used in a broaching machine. The broaching tool is formed of a linear metal rod, and multiple cutting blades are arranged in its longitudinal direction. Broaching is performed by reciprocating the broaching tool in the longitudinal direction.

Through broaching, the spline groove groups 50, 50 (upper and lower spline groups 50, 50 on respective sides of the opening 18a in FIG. 2) arranged so as to be point-symmetric at intervals of 180 degrees are formed at the same time. That is, as shown in FIG. 2, the middle spline groove 51 of the upper spline groove group 50 and the middle spline groove 51 of the lower spline groove, group 50 extend along the same straight line, that is, a straight line that extends in the radial direction. Therefore, it is possible to form the middle spline grooves 51 at the same time through broaching. In addition, the side spline grooves 52 of the upper spline groove group 50 and the side spline grooves 52 of the lower spline groove group 50 extend along the same straight lines (straight lines that are offset from each other by a predetermined distance in a direction perpendicular to the radial direction). With this configuration, it is possible to form the side spline grooves 52 at the same time through broaching. This simultaneous machining also applies to the spline groove groups 60, 60 (the right and left spline groove groups 60, 60 on respective sides of the opening 18a in FIG. 2).

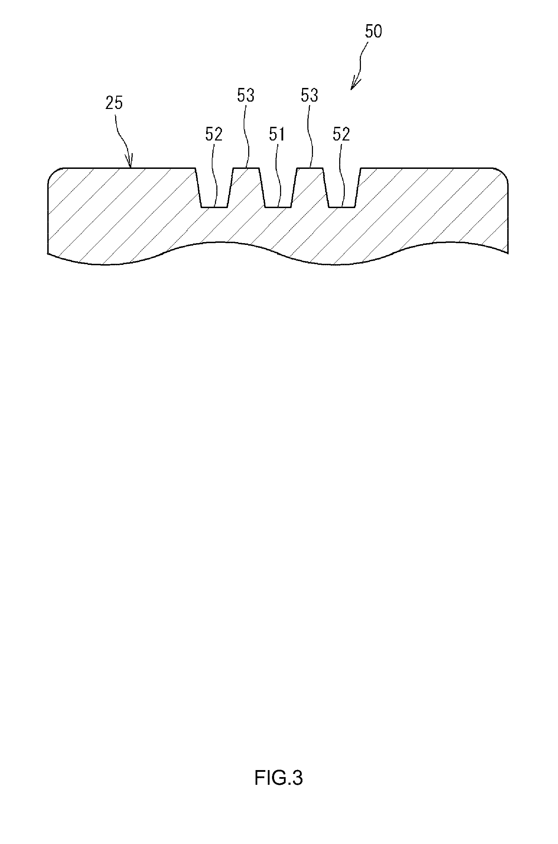

FIG. 3 is a sectional view taken along the line X-X in FIG. 2. As shown in FIG. 3, in each spline groove group 50, a protrusion (spline protrusion) 53 that extends linearly is formed between the spline groove 51 and each spline groove 52 that are adjacent to each other. As described above, because the spline grooves 51, 52 are formed by broaching, the sectional shape of each of the spline grooves 51, 52 does not change and is therefore constant in the groove longitudinal direction. Therefore, the sectional shape of each protrusion 53 also does not change and is therefore constant in its longitudinal direction. As shown in FIG. 3, each spline groove group 50 has the protrusions 53 and the spline grooves 51, 52 that are alternately formed in the direction perpendicular to the radial direction. In FIG. 3, the upper spline groove group 50 is illustrated. The groove shape, including the sectional shape, shown in FIG. 3 also applies to the lower spline groove group 50 and the right and left spline groove groups 60, 60.

Referring back to FIG. 1, the joint 30 includes an inner ring 32, an outer ring 33 and a plurality of balls 34. The joint 30 is a constant velocity joint in the present embodiment. The inner ring 32 is fixed to an end portion of a drive shaft 31, the end portion being on the other side of the drive shaft 31 in the axial direction. The outer ring 33 is arranged radially outward of the inner ring 32. The balls 34 are arranged between the inner ring 32 and the outer ring 33. The outer ring 33 has a closed-end cylindrical shape. The outer ring 33 has a tubular portion 35 and a bottom portion 36. The tubular portion 35 has a tubular shape. The bottom portion 36 is integrated with a portion of the tubular portion 35, the portion being on the other side of the tubular portion 35 in the axial direction. A small tubular portion 36a that extends toward the other side in the axial direction (outward in the lateral direction of the vehicle) is formed at the center of the bottom portion 36. A bolt hole 37 is defined by the inner periphery of the small tubular portion 36a. A threaded portion 4a that is formed at the distal end of the bolt 4 is screwed into the bolt hole 37. In the joint 30, second splines (spline teeth) 39 are formed in a side face 38 of the bottom portion 36, the side face 38 being on the other side of the bottom portion 36 in the axial direction.

The side face 38 of the bottom portion 36 faces the other side in the axial direction (faces outward in the lateral direction of the vehicle), and is formed of an annular face. The side face 38 has the second splines 39 that mesh with the first splines 26 (see FIG. 2) formed in the hub unit 10. That is, the second splines 39 are formed of spline protrusions that are fitted into the spline grooves 51, 52 shown in FIG. 3 and spline grooves into which the protrusions 53 shown in FIG. 3 are fitted. The second splines 39 may be formed by broaching. Alternatively, the second splines 39 may be formed by another method, such as milling.

As described above, the second splines 39 of the joint 30 are meshed with the first splines 26 of the hub unit 10. When the second splines 39 and the first splines 26 are in mesh with each other, torque is transmitted between the rotary ring 12 of the hub unit 10 and the outer ring 33 of the joint 30. According to a method of forming the splines 26, which are to be meshed with the joint 30, in the side face 25 of the rotary ring 12 of the hub unit 10, the spline grooves 51, 52 are formed by subjecting the side face 25 to broaching as described above. With this method, the finished sectional shape (see FIG. 3) of each of the spline grooves 51, 52 is substantially the same as the sectional shape of the broaching tool used in machining. Therefore, the finished sectional shape has high accuracy, and the machining speed is high. As a result, it is possible to form the splines with high accuracy more easily than in related art.

As shown in FIG. 1, the hub unit 10 and the joint 30 according to the present embodiment are assembled together in the following manner. First, the rotary ring 12 of the hub unit 10 and the outer ring 33 of the joint 30 are arranged so as to face each other in the axial direction. Then, the first splines 26 formed in the side face 25 of the rotary ring 12 and the second splines 39 formed in the side face 38 of the outer ring 33 are meshed with each other. After that, the hub unit 10 and the joint 30 are fastened together with the bolt 4. In this way, in order to allow transmission of torque between the rotary ring 12 and the outer ring 33, it is only necessary to bring the rotary ring 12 and the outer ring 33 close to each other in the axial direction, and mesh the first splines 26 of the rotary ring 12 and the second splines 39 of the outer ring 33 with each other. Therefore, assembly is easily performed.

The bolt 4 is a member that couples the rotary ring 12 and the outer ring 33, which are arranged so as to extend along the same straight line, by fastening the rotary ring 12 and the outer ring 33 to each other in the axial direction. The bolt 4 has a bolt head 4b and a threaded portion 4a. The bolt head 4b is larger in diameter than the through-hole 18 of the rotary ring 12. The threaded portion 4a is screwed into the bolt hole 37 that is formed in the outer ring 33. The distal end portion (threaded portion 4a) of the bolt 4 is inserted into the through-hole 18 from the other side in the axial direction, and is screwed into the bolt hole 37. In this way, the bolt 4 couples the rotary ring 12 to the outer ring 33 by fastening the rotary ring 12 to the outer ring 33 in the axial direction. In a state where the bolt 4 is fastened and an axial tension acts on the bolt 4, the hub unit 10 and the joint 30 are coupled to each other and rotary torque is transmitted from the joint 30 to the hub unit 10.

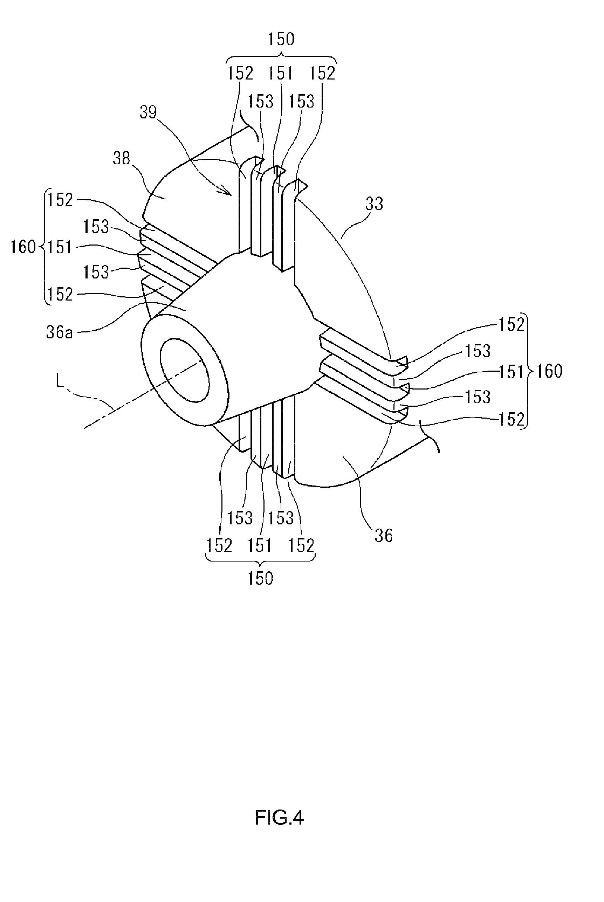

In the above-described embodiment, the first splines 26 having the spline grooves 51, 52 formed by broaching are formed in the side face 25 of the rotary ring 12 of the hub unit 10. Alternatively, spline grooves that are formed by broaching may be formed in the joint 30. FIG. 4 is a perspective view of the side face 38 of the outer ring 33 of the joint 30. The second splines 39 that are meshed with the hub unit 10 are formed in the side face 38, and the spline grooves of the second splines 39 are formed by broaching. That is, by subjecting the side face 38 of the outer ring 33 to broaching, the spline grooves are formed in the side face 38.

Particularly, in the embodiment shown in FIG. 4, each set of the second splines 39 includes spline grooves that are parallel to each other (as in the case of the rotary ring 12 of the hub unit 10 shown in FIG. 2). That is, the second splines 39 include spline groove groups 150, 160. Each of the spline groove groups 150, 160 has a spline groove 151 and other spline grooves 152. The spline groove 151 extends linearly in the radial direction (in one direction). The other spline grooves 152 are parallel to the spline groove 151 and extend linearly. The spline grooves 151, 152 are formed by broaching. In addition, the upper and lower spline groove groups 150 in FIG. 4 are formed in the side face 38 so as to be point-symmetric at intervals of 180 degrees about the intersection of the center line L of the outer ring 33 with the side face 38. In addition, the right and left spline groove groups 160 are formed in the side face 38 so as to be point-symmetric at intervals of 180 degrees about the same point (the above-described intersection). The spline groove groups 150, 160, 150, 160 are arranged at equal intervals in the circumferential direction.

According to the embodiment shown in FIG. 4, the spline grooves 151, 152 are formed in the joint 30 by broaching. In this way, the finished sectional shape of each of the spline grooves 151, 152 is substantially the same as the sectional shape of the broaching tool used in machining. As a result, the finished sectional shape is highly accurate, and the machining speed is high. Therefore, it is possible to form the splines with high accuracy more easily than in related art. In the embodiment shown in FIG. 4, the first splines of the hub unit 10 that mesh with the second splines 39 of the joint 30 may be formed by broaching. Alternatively, the first splines of the hub unit 10 may be formed by another method, such as milling.

The wheel support device according to the invention is not limited to the one in the illustrated embodiment, and may be implemented in various other embodiments within the scope of the invention. For example, the joint 30 may be a joint other than the constant velocity joint. In the above-described embodiment, a torque transmission ring of the joint 30 is the closed-end cylindrical outer ring 33 (see FIG. 1). Alternatively, a torque transmission ring may be a member that has another shape.

With the spline forming method for a hub unit and the hub unit according to the invention, it is possible to form the splines with high accuracy in the axial side face of the rotary ring more easily than in related art. With the spline forming method for a joint and the joint according to the invention, it is possible to form the splines with high accuracy in the axial side face of the torque transmission ring more easily than in related art.

## Claims

1. A spline forming method for a hub unit that includes: a fixed ring that is fixed to a vehicle body-side member; a rotary ring to which a wheel is fitted; and rolling elements that are arranged between the fixed ring and the rotary ring, the spline forming method for forming splines, which are to be meshed with a joint that transmits torque to the rotary ring, in a side face of the rotary ring of the hub unit, the side face being on one side of the rotary ring in an axial direction, comprising:
forming spline grooves in the side face by subjecting the side face to broaching.

2. The spline forming method according to claim 1, wherein a plurality of the spline grooves that are parallel to each other is formed in the side face by subjecting the side face to broaching.

3. A hub unit, comprising:
a fixed ring that is fixed to a vehicle body-side member;
a rotary ring to which a wheel is fitted; and
rolling elements that are arranged between the fixed ring and the rotary ring, wherein
splines, which are to be meshed with a joint that transmits torque to the rotary ring, are formed in a side face of the rotary ring, the side face being on one side of the rotary ring in an axial direction, and
the splines have a plurality of spline grooves that are parallel to each other.

4. The hub unit according to claim 3, wherein spline groove groups each of which is formed of the spline grooves that are parallel to each other are formed in the side face so as to be point-symmetric at intervals of 180 degrees about an intersection of a center line of the rotary ring with the side face.

5. A spline forming method for a joint that includes: a torque transmission ring that transmits torque to a hub unit that supports a wheel such that the wheel is rotatable with respect to a suspension provided on a vehicle body side of an automobile, the spline forming method for forming splines, which are to be meshed with the hub unit, in an axial side face of the torque transmission ring, comprising:
forming spline grooves in the side face by subjecting the side face to broaching.

6. Ajoint, comprising:
a torque transmission ring that transmits torque to a hub unit that supports a wheel such that the wheel is rotatable with respect to a suspension provided on a vehicle body side of an automobile, wherein
splines, which are to be meshed with the hub unit, are formed in an axial side face of the torque transmission ring, and the splines have a plurality of spline grooves that are parallel to each other.
